# FASCICULE DE BREVET EUROPEEN

(11) **EP 3 377 731 B1**
(45) Date de publication et mention de la délivrance du brevet: **01.01.2020**
(21) Numéro de dépôt: 16804838.7
(22) Date de dépôt: 10.11.2016
(51) Int. Cl.: F01D 5/18, F01D 9/06

(54) **AUBE ÉQUIPÉE D'UN SYSTÈME DE REFROIDISSEMENT, DISTRIBUTEUR ET TURBOMACHINE ASSOCIÉS**
SCHAUFEL MIT KÜHLSYSTEM, ZUGEHÖRIGE LEITSCHAUFELANORDNUNG UND ZUGEHÖRIGE TURBOMASCHINE
BLADE EQUIPPED WITH A COOLING SYSTEM, ASSOCIATED GUIDE VANES ASSEMBLY AND ASSOCIATED TURBOMACHINE

(30) Priorité: 19.11.2015 FR 1561123
(43) Date de publication de la demande: 26.09.2018
(73) Titulaire: Safran Helicopter Engines, 64510 Bordes (FR)
(72) Inventeur: HALLOUIN, Baptiste, 77550 Moissy-Cramayel (FR); BREINING, Jean-Luc, 77550 Moissy-Cramayel (FR); LABERNY, Damien, 77550 Moissy-Cramayel (FR)
(74) Mandataire: Gevers & Orès
(86) Numéro de dépôt international: PCT/FR2016/052921
(87) Numéro de publication internationale: WO 2017/085380

(56) Documents cités:
- EP-A1- 0 919 698
- EP-A1- 1 538 306
- EP-A2- 0 974 733
- EP-A2- 2 613 004

## Description

### 1. Domaine technique de l'invention

L'invention concerne une aube d'un distributeur d'une turbomachine. En particulier, l'invention concerne une aube d'un distributeur équipée d'un système de refroidissement de l'aube et d'autres pièces de la turbomachine.

### 2. Arrière-plan technologique

Une turbomachine comprend, généralement, d'amont en aval, un ou plusieurs étages de compresseurs, par exemple un compresseur basse pression et un compresseur haute pression, une chambre de combustion, un ou plusieurs étages de turbines, par exemple une turbine haute pression et une turbine basse pression. L'amont et l'aval sont définis par rapport au sens d'écoulement normal du gaz dans une veine d'écoulement (de l'amont vers l'aval).

La turbine convertit l'énergie thermique et cinétique du flux de gaz issu de la chambre de combustion en énergie mécanique nécessaire par exemple à l'entraînement de compresseur et/ou de rotor dans le cas d'un hélicoptère.

La turbine comprend habituellement un ou plusieurs étages d'aubes, chaque étage comportant généralement, de manière connue, une grille d'aubes fixes appelée distributeur et une grille d'aubes mobiles. L'ensemble des aubes d'une grille d'aubes est parfois désigné par le terme « aubage ». Les aubes comprennent une partie dirigée vers l'amont, dite bord d'attaque, et une partie dirigée vers l'aval, dite bord de fuite.

Le distributeur est généralement refroidi par convection forcée, au moyen de circuits parcourant l'intérieur des aubes et formant un labyrinthe. L'air de refroidissement entre dans les aubes du côté de la chambre de combustion de la turbine en périphérie de la chambre de combustion, au niveau d'une partie de chaque aube du distributeur appelée méridienne externe. L'air de refroidissement circule à partir des méridiennes externes et traverse les aubes, de sorte à refroidir les aubes de l'intérieur (notamment les bords d'attaque des aubes), jusqu'à une partie de chaque aube du distributeur appelée méridienne interne, située du côté d'un moyeu central de la turbine. Les termes air de refroidissement ou air froid désignent de l'air dont la température est inférieure à la température du gaz circulant dans la veine d'écoulement de la turbomachine et permettant de baisser la température des éléments se situant dans la veine d'écoulement.

Une partie de l'air de refroidissement est prélevée au niveau de ces méridiennes internes pour être transmise au moyeu, de façon à refroidir d'autres pièces de la turbine. Néanmoins, dans les systèmes de refroidissement où les aubes sont refroidies aux moyens des circuits en labyrinthe, l'air transmis au moyeu est un air réchauffé au niveau des bords d'attaque des aubes et a donc une température plus élevée que l'air de refroidissement. De plus, la quantité d'air de refroidissement consommée est importante.

D'autres systèmes de refroidissement intègrent des inserts ou double-peaux, agencés à l'intérieur des aubes et permettant de refroidir la surface interne des aubes. Notamment, les inserts comprennent une paroi multi-perforée permettant de refroidir les bords d'attaque des aubes par des impacts d'air froid. Ces inserts permettent de réduire la consommation d'air par rapport aux systèmes de refroidissement en labyrinthe. De plus, les coefficients d'échange convectif sont plus élevés que ceux induits par le système en labyrinthe. Dans certains cas, ces inserts sont prolongés de façon à traverser la méridienne interne pour acheminer une partie de l'air prélevé vers d'autres pièces de la turbine, via le moyeu.

Toutefois, cette configuration d'insert entraine une fuite importante d'air froid à l'interface entre l'insert et la méridienne interne. L'air passant par cette fuite est perdu (notamment dans la veine d'écoulement des gaz) et ne sert pas au refroidissement des aubes ni des autres pièces de la turbine.

Les inventeurs ont donc cherché un moyen d'améliorer les aubes de distributeurs existantes. Les documents EP0974733A2, EP0919698A1, EP2613004A2, EP1538306A1 décrivent des aubes telles que connues dans la technique.

### 3. Objectifs de l'invention

L'invention vise à pallier au moins certains des inconvénients des aubes connus.

En particulier, l'invention vise à fournir, dans au moins un mode de réalisation de l'invention, une aube équipée d'un système de refroidissement qui permet de refroidir efficacement l'aube et d'autres pièces d'une turbomachine dans laquelle est installée l'aube.

L'invention vise aussi à fournir, dans au moins un mode de réalisation, une aube équipée d'un système de refroidissement limitant la consommation d'air de refroidissement.

L'invention vise aussi à fournir, dans au moins un mode de réalisation, une aube équipée d'un système de refroidissement réduisant les pertes d'air de refroidissement.

L'invention vise aussi à fournir, dans au moins un mode de réalisation, une aube équipée d'un système de refroidissement permettant de limiter le réchauffement de l'air traversant l'aube pour refroidir d'autres pièces de la turbomachine.

### 4. Exposé de l'invention

Pour ce faire, l'invention concerne une aube d'un distributeur d'une turbomachine équipée d'un système de refroidissement selon la revendication 1.

Une aube selon l'invention permet donc, via son système de refroidissement, un prélèvement direct d'une partie de l'air de refroidissement dans l'insert avant son réchauffement par des éléments à refroidir. L'air de refroidissement est donc acheminé dans le moyeu, de manière centripète, en minimisant son réchauffement entre son entrée par l'entrée de l'aube et son arrivée au niveau du moyeu. La température de l'air arrivé au niveau du moyeu est donc proche de la température de l'air en entrée de l'insert. Une fois la partie de l'air de refroidissement transmise au moyeu, elle est utilisée pour refroidir d'autres éléments de la turbomachine.

De plus, la disposition de la tête de prélèvement dans la cavité interne de l'aube permet de confiner les éventuelles fuites d'air au niveau de l'ouverture de l'insert dans laquelle est disposée la tête de prélèvement, qui restent dans la cavité interne de l'aube. Ces fuites d'air sont ainsi maitrisées, elles participent au refroidissement des aubes et l'air provenant des fuites n'est pas perdu.

Selon l'invention, le dispositif de prélèvement comprend un tube de prélèvement, relié d'une part à l'aube par une première liaison rotule et adapté pour être relié d'autre part à un moyeu central de la turbomachine par une deuxième liaison rotule, adapté pour transmettre la partie de l'air prélevé provenant de la tête de prélèvement vers le moyeu de la turbomachine.

Selon cet aspect de l'invention, les liaisons mécaniques de type rotule reliant le tube de prélèvement à l'aube et au moyeu permettent la transmission de la partie d'air prélevé par la tête de prélèvement vers le moyeu, tout en conservant une possibilité de déplacements entre l'aube du distributeur et le moyeu. Ces déplacements sont dus notamment à l'action des chargements thermomécaniques, et peuvent endommager le tube de prélèvement en l'absence de ces liaisons rotules.

Avantageusement et selon ce dernier aspect de l'invention, la tête de prélèvement et le tube de prélèvement sont solidairement reliés.

Selon cet aspect de l'invention, la tête de prélèvement et le tube de prélèvement forment une seule pièce, appelée organe de prélèvement, simple à fabriquer sans nécessiter de modifier l'aube de façon importante. Dans cette variante de l'invention, le jeu entre la tête de prélèvement et l'ouverture dans l'insert est conçu de façon à permettre le déplacement de la tête de prélèvement, car celle-ci est solidaire du tube de prélèvement qui peut se déplacer lorsque l'aube et/ou le moyeu se déplacent, tout en minimisant les fuites d'air au niveau de l'ouverture.

Avantageusement et selon l'invention, la tête de prélèvement et l'aube sont solidairement reliées.

Selon cet aspect de l'invention, la tête de prélèvement est fixe, ce qui permet de réduire le jeu entre l'ouverture de l'insert et la tête de prélèvement et ainsi réduire les fuites d'air au niveau de l'ouverture. La tête de prélèvement peut être formée d'une partie de l'aube et ainsi être fabriquée dès la fabrication de l'aube.

L'invention concerne également un distributeur comprenant une pluralité d'aubes disposées autour d'un moyeu central de la turbomachine, caractérisé en ce qu'au moins une aube du distributeur est une aube selon l'invention.

L'invention concerne également une turbomachine, comprenant un moyeu central et caractérisée en ce qu'elle comprend un distributeur selon l'invention.

L'invention concerne également une aube, un distributeur et une turbomachine caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'une aube d'un distributeur équipée d'un système de refroidissement selon un premier mode de réalisation de l'invention,
- la figure 2 est une vue schématique en coupe d'une aube d'un distributeur équipée d'un système de refroidissement selon un premier mode de réalisation de l'invention,
- la figure 3 est une vue schématique en coupe d'une aube d'un distributeur équipée d'un système de refroidissement selon un deuxième mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

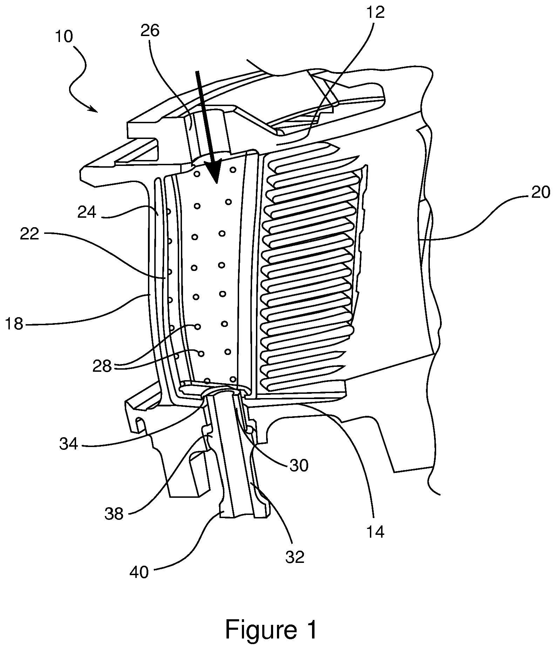

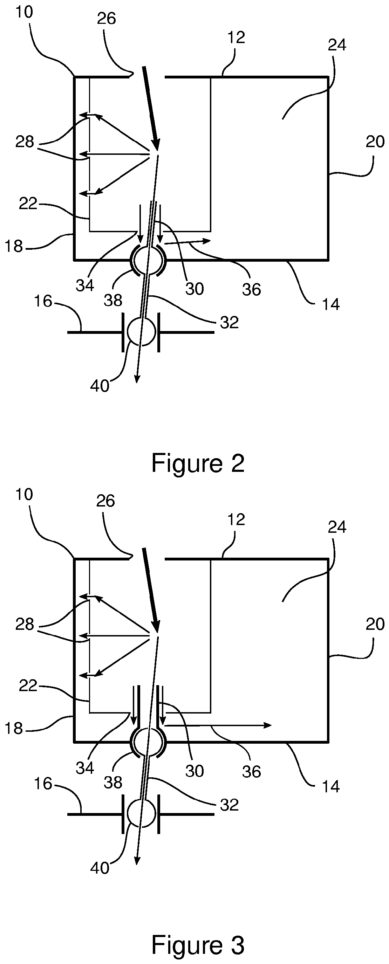

Les figures 1 à 3 représentent schématiquement, en perspective pour la figure 1 et en coupe pour les figures 2 et 3, une aube 10 d'un distributeur d'une turbomachine. L'aube 10, telle que disposée dans une turbomachine, comprend une partie appelée méridienne 12 externe située du côté d'une chambre de combustion (non représentée) de la turbomachine, et une partie appelée méridienne 14 interne située du côté d'un moyeu central 16 de la turbomachine autour duquel tournent les pièces de la turbomachine en rotation. En outre, la turbomachine étant traversée d'amont en aval par un gaz, la partie de l'aube 10 orientée vers l'amont est appelée bord 18 d'attaque et la partie de l'aube 10 orientée vers l'aval est appelée bord 20 de fuite.

L'aube 10 est équipée d'un système de refroidissement selon différents modes de réalisation décrits ci-dessous. Sur les figures 1 à 3, des flèches représentent en partie la circulation de l'air de refroidissement dans les différents éléments de l'aube 10 et/ou du système de refroidissement.

L'aube 10 représentée sur les figures 1 et 2 est équipée d'un système de refroidissement selon un premier mode de réalisation de l'invention.

Le système de refroidissement comprend un insert 22, aussi appelé double-peau, disposé dans une cavité 24 interne de l'aube 10, et relié à une entrée 26 d'air de refroidissement de l'aube 10. L'insert comprend des micro-perforations 28 permettant de créer des impacts d'air froid sur la surface de la cavité 24 interne de l'aube 10, notamment au niveau du bord 18 d'attaque.

Le système de refroidissement comprend en outre un dispositif de prélèvement, comprenant une tête 30 de prélèvement creuse disposée dans la cavité 24 interne de l'aube 10 et configurée pour prélever une partie de l'air de refroidissement à l'intérieur de l'insert 22. Pour ce faire, la tête 30 de prélèvement traverse une ouverture 34 de l'insert 22, de façon à ce qu'une partie de l'air circulant dans l'insert 22 entre dans la tête 30 de prélèvement.

L'intervalle entre l'ouverture 34 et la tête 30 de prélèvement entraine des fuites 36 d'air de refroidissement. Puisque la tête 30 de prélèvement est disposée dans la cavité 24 interne de l'aube 10, l'air fuyant par ces fuites 36 reste dans la cavité 24 interne de l'aube 10 et participe donc au refroidissement de l'aube 10.

Le dispositif de prélèvement comprend en outre un tube 32 de prélèvement creux, adapté pour transmettre la partie de l'air prélevé à l'intérieur de l'insert 22 provenant de la tête 30 de prélèvement et la transmettre vers le moyeu 16 central.

Le tube 32 de prélèvement est relié d'une part à l'aube 10 par une première liaison 38 rotule et d'autre part au moyeu 16 par une deuxième liaison 40 rotule. En particulier, la première liaison 38 rotule est située sur la méridienne 14 interne de l'aube 10, car cette partie de l'aube 10 se situe à proximité et en regard du moyeu 16. Les liaisons 38, 40 rotules forment des liaisons mécaniques permettant le déplacement de l'aube 10 et du moyeu 16 l'un par rapport à l'autre.

Dans ce premier mode de réalisation, la tête 30 de prélèvement et le tube 32 de prélèvement sont solidairement reliés et forment une seule pièce appelée organe de prélèvement.

Du fait de la présence de la première liaison 38 rotule entre le tube 32 de prélèvement et l'aube 10, la tête 30 de prélèvement est susceptible de se déplacer dans l'ouverture 34 de l'insert 22 en cas de déplacement de l'aube 10 par rapport au moyeu 16. Ainsi, les dimensions de l'ouverture 34 sont adaptées à ce déplacement de la tête 30 de prélèvement : le jeu entre l'ouverture 34 et la tête 30 de prélèvement est suffisamment important pour permettre le déplacement de la tête 30 de prélèvement, mais suffisamment réduit pour minimiser les fuites 36 d'air. Comme décrit précédemment, ces fuites 36 d'air sont dans tous les cas maîtrisées et participent au refroidissement de l'aube 10, elles ne représentent donc pas des pertes d'air de refroidissement.

L'aube 10 représentée sur la figure 3 est équipée d'un système de refroidissement selon un deuxième mode de réalisation de l'invention.

Ce mode de réalisation est similaire au premier mode de réalisation décrit précédemment, mais la tête 30 de prélèvement n'est pas solidairement reliée au tube 32 de prélèvement : la tête 30 de prélèvement est reliée solidairement à l'aube 10, en particulier au niveau de la méridienne 14 interne de l'aube, en regard du moyeu 16 de la turbomachine. La tête 30 de prélèvement peut par exemple être formée d'une partie de l'aube 10 et fabriquée avec l'aube 10 dans le même matériau.

## Revendications

1. Aube d'un distributeur d'une turbomachine équipée d'un système de refroidissement comprenant :
- un insert (22) agencé à l'intérieur d'une cavité (24) interne de ladite aube, relié à une entrée (26) d'air de refroidissement de l'aube et adapté pour refroidir la surface de la cavité (24) interne de l'aube,
- un dispositif de prélèvement, configuré pour prélever une partie de l'air de refroidissement à l'intérieur de l'insert (22) et adapté pour la transmettre vers un moyeu (16) central de la turbomachine,
le dispositif de prélèvement comprenant :
- une tête (30) de prélèvement, disposée dans la cavité (24) interne de l'aube et traversant une ouverture (34) de l'insert, et configurée pour prélever une partie de l'air de refroidissement à l'intérieur de l'insert (22),
**caractérisée en ce que** le dispositif de prélèvement comprend :
- un tube (32) de prélèvement, relié d'une part à l'aube par une première liaison (38) rotule et adapté pour être relié d'autre part à un moyeu (16) central de la turbomachine par une deuxième liaison (40) rotule, adapté pour transmettre la partie de l'air prélevé provenant de la tête (30) de prélèvement vers le moyeu (16) de la turbomachine.

2. Aube selon la revendication 1, **caractérisée en ce que** la tête (30) de prélèvement et le tube (32) de prélèvement sont solidairement reliés.

3. Aube selon la revendication 1, **caractérisée en ce que** la tête (30) de prélèvement et l'aube sont solidairement reliées.

4. Distributeur d'une turbomachine comprenant une pluralité d'aubes disposées autour d'un moyeu (16) central de la turbomachine, **caractérisé en ce qu'**au moins une aube du distributeur est une aube (10) selon l'une des revendications 1 à 3.

5. Turbomachine, comprenant un moyeu (16) central et **caractérisée en ce qu'**elle comprend un distributeur selon la revendication 4.

## Patentansprüche

1. Schaufel eines Verteilers einer Turbomaschine, die mit einem Kühlsystem ausgestattet ist, Folgendes umfassend:
- einen Einsatz (22), der in dem Inneren eines Innenhohlraums (24) der Schaufel eingerichtet ist, der mit einem Kühllufteingang (26) der Schaufel verbunden und angepasst ist, um die Oberfläche des Innenhohlraums (24) der Schaufel zu kühlen,
- eine Entnahmevorrichtung, die konfiguriert ist, um einen Teil der Kühlluft in dem Inneren des Einsatzes (22) zu entnehmen, und angepasst ist, um ihn zu einer Mittelnabe (16) der Turbomaschine zu übertragen,
die Entnahmevorrichtung Folgendes umfassend:
- einen Entnahmekopf (30), der in dem Innenhohlraum (24) der Schaufel angeordnet ist und eine Öffnung (34) des Einsatzes durchquert, und konfiguriert ist, um einen Teil der Kühlluft in dem Inneren des Einsatzes (22) zu entnehmen,
**dadurch gekennzeichnet, dass** die Entnahmevorrichtung Folgendes umfasst:
- ein Entnahmerohr (32), das einerseits mit der Schaufel durch eine erste Gelenkverbindung (38) verbunden ist, und angepasst ist, um andererseits mit einer Mittelnabe (16) der Turbomaschine durch eine zweite Gelenkverbindung (40) verbunden zu sein, das angepasst ist, um den Teil der entnommenen Luft, der von dem Entnahmekopf (30) kommt, zu der Nabe (16) der Turbomaschine zu übertragen.

2. Schaufel nach Anspruch 1, **dadurch gekennzeichnet, dass** der Entnahmekopf (30) und das Entnahmerohr (32) fest miteinander verbunden sind.

3. Schaufel nach Anspruch 1, **dadurch gekennzeichnet, dass** der Entnahmekopf (30) und die Schaufel fest miteinander verbunden sind.

4. Verteiler einer Turbomaschine, umfassend eine Vielzahl von Schaufeln, die um eine Mittelnabe (16) der Turbomaschine angeordnet sind, **dadurch gekennzeichnet, dass** mindestens eine Schaufel des Verteilers eine Schaufel (10) nach einem der Ansprüche 1 bis 3 ist.

5. Turbomaschine, umfassend eine Mittelnabe (16) und **dadurch gekennzeichnet, dass** sie einen Verteiler nach Anspruch 4 umfasst.

## Claims

1. Blade of a guide vane assembly of a turbomachine fitted with a cooling system comprising:
- an insert (22) arranged inside an internal cavity (24) of said blade, connected to a cooling air inlet (26) of the blade and designed to cool the surface of the internal cavity (24) of the blade,
- a bleed device, configured to bleed some of the cooling air inside the insert (22) and designed to send it to a central hub (16) of the turbomachine,
the bleed device comprising:
- a bleed head (30), arranged in the internal cavity (24) of the blade and passing through an opening (34) of the insert, and configured to bleed some of the cooling air inside the insert (22),
**characterised in that** the bleed device comprises:
- a bleed duct (32), connected on one hand to the blade by a first ball joint (38) and designed to be connected on the other hand to a central hub (16) of the turbomachine by a second ball joint (40), designed to send the bleed air coming from the bleed head (30) to the hub (16) of the turbomachine.

2. Blade according to claim 1, **characterised in that** the bleed head (30) and the bleed duct (32) are integrally connected.

3. Blade according to claim 1, **characterised in that** the bleed head (30) and the blade are integrally connected.

4. Guide vane assembly of a turbomachine comprising a plurality of blades arranged around a central hub (16) of the turbomachine, **characterised in that** at least one blade of the guide vane assembly is a blade (10) according to one of claims 1 to 3.

5. Turbomachine, comprising a central hub (16) and **characterised in that** it comprises a guide vane assembly according to claim 4.
